(19) Europäisches Patentamt
European Patent Office
Office européen des brevets

(11) Veröffentlichungsnummer: **0 242 729 B1**

(12) # EUROPÄISCHE PATENTSCHRIFT

(45) Veröffentlichungstag der Patentschrift: **04.09.91**

(51) Int. Cl.$^5$: **B01D 19/04**

(21) Anmeldenummer: **87105302.1**

(22) Anmeldetag: **10.04.87**

(54) **Entschäumergemisch.**

(30) Priorität: **18.04.86 DE 3613128**

(43) Veröffentlichungstag der Anmeldung:
**28.10.87 Patentblatt 87/44**

(45) Bekanntmachung des Hinweises auf die Patenterteilung:
**04.09.91 Patentblatt 91/36**

(84) Benannte Vertragsstaaten:
**AT BE CH DE ES FR GB IT LI NL SE**

(56) Entgegenhaltungen:
**EP-A- 0 055 818**
**EP-A- 0 217 116**
**DD-A- 200 025**
**DE-B- 1 595 369**
**US-A- 2 875 156**
**US-A- 3 118 000**
**US-A- 4 510 067**

**PATENT ABSTRACTS OF JAPAN, Band 5, Nr. 45 (C-48) (717) 25. März 1981; & JP-A-55167012 (ASAHI DENKA KOGYO K.K.) 26.12.1980**

**PATENT ABSTRACTS OF JAPAN, Band 3, Nr. 11 (C-35)(85) 30. Januar 1979; & JP-A-53134785 (NIPPON YUSHI K.K.) 24.11.1978**

(73) Patentinhaber: **Henkel Kommanditgesellschaft auf Aktien**
**Postfach 1100 Henkelstrasse 67**
**W-4000 Düsseldorf-Holthausen(DE)**

(72) Erfinder: **Höfer, Rainer, Dr.**
**Klever Strasse 31**
**W-4000 Düsseldorf 30(DE)**
Erfinder: **Schmid, Karlheinz, Dr.**
**Stifterstrasse 10**
**W-4020 Mettmann(DE)**
Erfinder: **Asbeck, Adolf**
**Am Langen Weiher 51**
**W-4000 Düsseldorf 13(DE)**
Erfinder: **Held, Uwe**
**Emil-Schniewind-Strasse 5**
**W-5620 Velbert 15(DE)**

EP 0 242 729 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der älteren europäischen Patentanmeldung 86111692.9 (mit Priorität vom 31.8.85) ist ein als Entschäumer verwendbares Blockpolymeres der Formel (I)

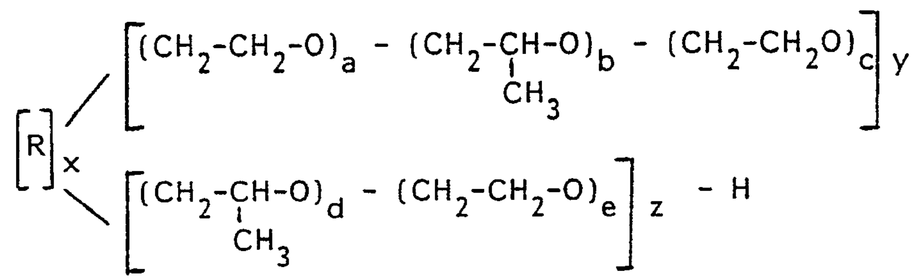

(I)

in der R für einen Glycerin- oder Polyglycerinrest mit dem Polymerisationsgrad x = 1 bis 6 steht und die Indices y = (x - z + 2), z = 0 bis 4, a = 1 bis 15, b = 20 bis 100, c = 1 bis 15, d = 20 bis 150 und e = 1 bis 15 bedeuten mit der Maßgabe, daß die Summen (a + c + e) = 3 bis 20, (b + d) = 40 bis 200 und (c + e) = 1 bis 15 bedeuten und y mindestens den Wert 1 besitzt.

Es wurde gefunden, daß die Mittel gemäß vorstehender Formel (I), in denen der Rest R einen Glycerinrest, einen Trimethylolethanrest oder Trimethylpropanrest oder einen Polyglycerinrest mit dem Polymerisationsgrad x = 2 bis 6 darstellt, vorteilhaft im Gemisch mit einem Emulgator der Formel (II) vorliegen

$R^1 - O - (CH_2CH_2\text{-}O)_n - R^2$ (II)

in der $R^1$ für einen geradkettigen oder verzweigten Alkyl- oder Alkenylrest mit 8 bis 20 C-Atomen oder einen alkylaromatischen Rest mit 12 bis 20 C-Atomen, $R^2$ für einen Alkylrest mit 3 bis 8 C-Atomen und n für eine Zahl von 4 bis 30 stehen.

Vorzugsweise steht $R^1$ für einen geradkettigen Alkylrest mit 10 bis 18 C-Atomen, $R^2$ für einen Alkylrest mit 4 bis 6 C-Atomen und n für eine Zahl von 6 bis 20.

Bevorzugt sind solche Blockpolymere, in denen die Indices y mindestens = 2, a = 1 bis 5, b bzw. d = 30 bis 100 und c bzw. e = 1 bis 5 bedeuten und die Summe (a + c + e) = 3 bis 15 beträgt. Weiterhin sind solche Blockpolymeren besonders bevorzugt, in denen R für einen Glycerinrest steht, d. h. in denen x = 1 bedeutet. In diesen, vom Glycerin abgeleiteten Blockpolymeren sind im allgemeinen 2 bis 3 Hydroxylgruppen mit Ethylenglykolethergruppen substituiert, d. h. y steht für 2 oder 3 und z für 0 oder 1.

Die Herstellung der Blockpolymeren erfolgt nach an sich bekannten Verfahren und wird vorzugsweise unter Druck und bei erhöhter Temperatur, beispielsweise 80 °C bis 200 °C, bevorzugt 100 °C bis 130 °C, in Gegenwart saurer oder alkalischer Katalysatoren durchgeführt. Saure Katalysatoren sind beispielsweise LEWIS-Säuren, wie Bortrifluorid oder Aluminiumchlorid. Bevorzugt sind alkalische Katalysatoren wie die Alkoholate, Hydroxide, Oxide, Carbonate, Hydride oder Amide von Alkali- oder Erdalkalimetallen. Besonders bevorzugt sind die Alkoholate, beispielsweise die Methylate oder Ethylate sowie die Hydroxide des Natriums oder Kaliums. Die Katalysatoren werden im allgemeinen in Mengen von 0,05 bis 3 Gew.-%, vorzugsweise von 0,1 bis 1 Gew.-%, bezogen auf das Endprodukt eingesetzt. Nach beendeter Umsetzung kann der Katalysator durch Neutralisation inaktiviert und das gebildete Salz mechanisch entfernt werden. In den Fällen, in denen seine Anwesenheit nicht stört, kann er auch in dem Produkt verbleiben, was mit Rücksicht auf die geringen Mengen, in denen das Blockpolymere als Schauminhibitor eingesetzt wird, in der Regel völlig unbedenklich ist.

Als Ausgangsmaterial für die Herstellung der Blockpolymeren der Formel (I) dienen Glycerin, Polyglycerin, Trimethylolethan, Trimethylolpropan sowie deren Gemische . Die bei der technischen Gewinnung von Glycerin, beispielsweise als Destillationsrückstände, anfallenden Polyglycerine, die im allgemeinen einen durchschnittlichen Polymerisationsgrad von 2 bis 6 aufweisen, können als Ausgangsmaterial verwendet werden, gegebenenfalls auch nach Vermischen mit mehr oder weniger großen Mengen an monomerem Glycerin. Vorzugsweise wird jedoch Glycerin als Ausgangsmaterial verwendet. Technische, insbesondere verfärbte Ausgangsmaterialien werden zweckmäßigerweise zuvor mit chemischen oder adsorptiv wirkenden Bleichmitteln behandelt und vor der Umsetzung entwässert, beispielsweise durch Erhitzen im Vakuum.

Nach Zusatz des Katalysators wird das Ausgangsmaterial unter Rühren in einer 1. Stufe mit 1 bis 15

Mol, vorzugsweise 2 bis 10 Mol Ethylenoxid umgesetzt. Nach Absinken des Drucks im Autoklaven, was im allgemeinen 0,5 bis 1,4 Stunden erfordert und das Ende der Reaktion anzeigt, werden unter weiterem Rühren 50 bis 250 Mol, vorzugsweise 80 bis 200 Mol Propylenoxid unter Druck zugeführt. Nach Abschluß der 2. Reaktionsstufe, angezeigt durch Druckabfall, erfolgt in entsprechender Weise die Umsetzung mit 1 bis 15 Mol, vorzugsweise 2 bis 10 Mol Ethylenoxid. Die gesamte in der 1. und 3. Stufe angewendete Menge Ethylenoxid beträgt 2 bis 20 Mol, vorzugsweise 3 bis 15 Mol. Da sich die Menge des Reaktionsproduktes von Stufe zu Stufe, insbesondere innerhalb der 2. Stufe, vervielfacht, wird die Reaktion zweckmäßigerweise mehrfach unterteilt.

Die Zusammensetzung der Blockpolymeren hinsichtlich des Verhältnisses der beiden Indices y und z zueinander ist in gewissem Maße von der Anzahl (a) der Ethylenoxidgruppen abhängig. Ethylenoxid reagiert bekanntlich bevorzugt mit primären Hydroxylgruppen. Daher reagieren in der ersten Stufe überwiegend die primären Hydroxylgruppen der eingesetzten Polyole und anschließend bevorzugt die intermediär gebildeten Ethylenglykolether mit Ethylenoxid. Die Umsetzung mit Propylenoxid verläuft unter Bildung sekundärer Hydroxylgruppen, weshalb schon kurz nach Beginn der Propoxylierungsstufe sowohl die Hydroxylgruppen des sich aufbauenden Alkoxylierungsproduktes als auch die bis dahin noch nicht umgesetzten Hydroxylgruppen des Ausgangsmaterials in gleichem Maße propoxyliert werden können. Daraus folgt, daß geringe Anteile an Ethylenoxid in der 1. Stufe, z. B. bei a = 1 bis 3, zu vergleichsweise höheren Werten von z führen und daß andererseits mit steigendem Wert von a der Wert von z abnimmt.

Die Verbindungen der Formel (II) sind an sich bekannt. Ihre Herstellung erfolgt im allgemeinen durch Ethoxylierung von Alkoholen der Formel $R^1$-OH und anschließende Veretherung der terminalen Hydroxylgruppe durch Überführung in das Alkoholat und Umsetzung mit Alkylchloriden oder Alkylbromiden (WILLIAMSON-Synthese). Als Ausgangsstoffe kommen aus natürlichen Fettstoffen gewonnene oder synthetische, z. B. durch Oxo-Synthese oder nach dem ZIEGLER-Verfahren hergestellte Alkohole bzw. Alkoholgemische in Frage. Beispiele hierfür sind Decyl-, Undecyl-, Lauryl-, Tridecyl-, Tetradecyl-, Pentadecyl-, Cetyl-, Stearyl- und Oleyl-Alkohol sowie deren Gemische. Oxo-Alkohole können Methylverzweigungen in Nachbarstellung zur Hydroxylgruppe aufweisen. Als besonders gut geeignet haben sich Cocos-Alkohol-Gemische und Gemische von Oxo-Alkoholen mit 12 bis 15 C-Atomen erwiesen. Die Reste $R^2$ können z. B. aus Propyl-, Isopropyl-, n-Butyl-, Isobutyl-, Amyl-, Isoamyl-, Hexyl-, Heptyl-und Octyl-Resten bestehen. Bevorzugt sind $C_4$-$C_6$-Alkylreste, insbesondere ein $C_4$-Alkylrest.

Das Gemisch besteht zweckmäßigerweise aus 99 bis 70 Gew.-%, insbesondere 96 bis 80 Gew.-% des Blockpolymeren gemäß Formel (I) und zu 1 bis 30 Gew.-%, insbesondere 4 bis 20 Gew.-% aus dem Emulgator der Formel (II). Es hat sich gezeigt, daß diese Gemische stabile, klare wäßrige Dispersionen bilden, die sie für zahlreiche Anwendungsgebiete besonders geeignet machen. In emulgierter Form sind die Entschäumer in einigen Fällen noch wirksamer als in nicht emulgierter Form. Insbesondere gilt dies für den Einsatz in wäßrigen Polymerdispersionen und Latices. Beispiele hierfür sind wäßrige Dispersionen von Acrylat- bzw. Vinylacetat-Homopolymeren und -Copolymeren, Naturkautschuk-und Synthesekautschuk-Latices. Besonders brauchbar sind sie zur Schaumunterdrückung bei der Weiterverarbeitung von Kunststoff-Dispersionen, z. B. bei der Entfernung von Monomeren aus Polyvinylchlorid, Polystyrol oder Polybutadien, die auf dem Wege der Emulsions- bzw. Suspensions-Polymerisation erhalten wurden. Sie verhindern weiterhin wirksam eine Schaumbildung beim Umfüllen, Transportieren und bei der Anwendung derartiger wäßriger Systeme.

Bei der Anwendung können die Gemische unverdünnt oder mit Wasser verdünnt eingesetzt werden, beispielsweise im Verhältnis von Gemisch zu Wasser wie 1 : 10 bis 1 : 200, vorzugsweise im Bereich 1 : 25 bis 1 : 100. Derartige Emulsionen sind klar und über einen Beobachtungszeitraum von mehreren Wochen lagerstabil.

Man kann die erfindungsgemäßen Gemische auch nach Lösen in organischen Lösungsmitteln, beispielsweise niedermolekularen Alkoholen, verwenden. Sie können auch mit Verschnittsubstanzen, Dispergiermitteln oder weiteren schauminhibierend wirkenden Verbindungen vermischt und in dieser Form eingesetzt werden. Beispiele hierfür sind Fettsäureester und Paraffine bzw. Paraffinöle. Sie können auch auf Trägerkörner, die aus einem saugfähigen Material bestehen, aufgebracht werden und in dieser Form, d. h. als schütt- und rieselfähige Adsorbate, zum Einsatz kommen. Geeignete Trägermaterialien sind z. B. lockere, insbesondere sprühgetrocknete Salze wie Sulfate, Carbonate, Phosphate, Polyphosphate, Silikate und Borate des Natriums oder Magnesiums, feinteiliges Siliciumdioxid (Kieselgur, Aerosil ® ) bzw. Aluminiumoxid sowie feinteilige Tone, Bentonite und Alumosilikate sowie Gemische derartiger Adsorptionsmittel.

Die erfindungsgemäßen Zubereitungen sind hochwirksame Entschäumer und eignen sich für zahlreiche Einsatzgebiete, insbesondere in der Nahrungsmittelindustrie und in der chemischen Verfahrenstechnik. Beispiele hierfür sind die Zuckerindustrie (Entschäumung von Melasse), Gärindustrie (Entschäumung von

Hefe- und Enzymlösungen), Stärkeindustrie (Gewinnung von Kartoffelstärke) sowie die Herstellung von Phosphorsäure aus mineralischen Phosphaten. Weitere Einsatzgebiete sind industrielle Reiniger und Reinigungsverfahren, insbesondere bei der Spritzreinigung und dem Reinigen von Flaschen sowie die Verwendung als schaumarme Netzmittel bzw. als Entschäumer bei Polymerisationsreaktionen.

Der besondere Wert der erfindungsgemäßen Gemische ist darin zu sehen, daß sie ihre schauminhibierende Wirkung bei der Anwendung über lange Zeit beibehalten. In zahlreichen technischen Prozessen werden die Behandlungslösungen über einen längeren Zeitraum einer intensiven mechanischen Bearbeitung und erhöhten Temperaturen ausgesetzt, beispielsweise bei Eindampfungsprozessen mit starker Umwälzung der Lösung. Zwar kennt man eine Reihe von Schaumdämpfungsmitteln, die in solchen Fällen einen spontanen Zerfall des Schaums bewirken. Nach kurzer Zeit läßt die Wirkung des Inhibitors jedoch nach und es baut sich erneut Schaum auf. Andere Produkte zerstören den Schaum verhältnismäßig langsam, aber bewirken eine sehr anhaltende Schaumdepression. Die erfindungsgemäßen Mittel zeichnen sich sowohl durch eine hohe Spontanwirkung als auch eine ausdauernde Langzeitwirkung aus. Gegenüber zahlreichen Schauminhibitoren auf Silikon- bzw. Paraffin-Basis haben sie den wesentlichen Vorteil, daß sie das Substrat nicht hydrophobieren.

## Beispiele

### I. Herstellung der Blockpolymeren

a) 444 g (4,8 Mol) wasserfreies Glycerin wurden mit 8,9 g Natriummethylat (eingesetzt als 30%ige methanolische Lösung) vermischt und nach Entfernen des Methanols durch Erhitzen im Vakuum in einem Autoklaven unter Rühren bei 180 °C mit 1550 g (35,4 Mol) Ethylenoxid (EO) im Verlauf von 2 Stunden umgesetzt. Nach Absinken des Drucks wurde noch 30 Minuten nachgerührt und dann das Produkt abgekühlt.

b) 364 g (0,89 Mol) des ethoxylierten Glycerins (7,3 EO) wurden mit 17,6 g KOH (in 30%iger methanolischer Lösung) nach Entfernen des Methanols im Vakuum in einem Autoklaven mit 1630 g (28,2 Mol) Propylenoxid (PO) unter Rühren bei 120 °C umgesetzt. Nach Absinken des Drucks wurde noch 30 Minuten bei 120 °C weitergerührt. Das abgekühlte Produkt entsprach der Zusammensetzung R + 7,3 EO + 32 PO.

c) 564 g (0,24 Mol) des gemäß Versuch b erhaltenen Umsetzungsproduktes wurden nach Zugabe von 12,8 g KOH (in 30%iger methanolischer Lösung) und Entfernen des Methanols im Vakuum in einem Autoklaven bei 120 °C unter Rühren mit weiteren 1395 g (24,1 Mol) Propylenoxid zur Reaktion gebracht und nach Absinken des Drucks noch 30 Minuten bei 120 °C weitergerührt. Anschließend wurden 59 g (1,34 Mol) Ethylenoxid zugeführt. Nach Absinken des Drucks wurde das Reaktionsgut noch 30 Minuten weitergerührt und abgekühlt. Es wurde ein praktisch farbloses Produkt erhalten, dessen Zusammensetzung theoretisch

$$R - (CH_2CH_2O)_{7,2} - (CH_2\underset{\displaystyle CH_3}{\underset{|}{C}}H-O)_{135} - (CH_2CH_2O)_6 - H$$

lautete, worin R für den Glycerinrest steht.

Die analytisch bestimmte Hydroxylzahl (OHZ) betrug 30. Die Abweichung vom theoretischen Wert erklärt sich daraus, daß geringe Anteile des Propylenoxids während der Alkoxylierungsreaktion zu Allylalkohol isomerisieren, der dann mit weiterem Propylenoxid zu dem entsprechenden Polypropylenglykolether weiter reagiert. Dieses Nebenprodukt stört bei der Anwendung der Produkte nicht.

### II. Herstellung der Emulgatoren

2a. Als Ausgangsmaterial für den Emulgator diente ein mit 7 Mol Ethylenoxid (EO) umgesetzter $C_{12}$-$C_{18}$-Cocosalkohol, von dem die sogenannten Vorlaufalkohole mit 10 und weniger C-Atomen zuvor abgetrennt worden waren. Der Polyglykolether wurde anschließend mit equimolaren Mengen Natriummethylat versetzt und durch Abdestillieren des Methylalkohols in das Alkoholat überführt. Anschließend wurde das Alkoholat mit equimolaren Mengen n-Butylchlorid-1 umgesetzt und das als Nebenprodukt anfallende Natriumchlorid abgetrennt.

In analoger Weise wurden hergestellt
2b. Cocosalkohol + 12 EO-(n)Butylether
2c. Oleylalkohol + 16 EO-(n)Butylether

III. Herstellung der Entschäumerdispersion

90 g der Blockpolymeren gemäß Beispiel 1a bis c des Hauptpatentes wurden jeweils bei Raumtemperatur mit 10 g der Emulgatoren gemäß vorstehendem Beispiel 2 vermischt. Die homogenisierten Mischungen waren klar und lagerbeständig. Wäßrige Dispersionen, enthaltend 2 Gew.-% der Mischprodukte waren ebenfalls klar und über einen Beobachtungszeitraum von 4 Wochen bei 25 °C beständig.

IV. Anwendungstechnische Prüfung

Getestet wurden Gemische aus dem Blockpolymeren gemäß Beispiel 1 und Emulgatoren gemäß Beispiele 2a bis c. Eine Testlösung, bestehend aus 100 ml einer wäßrigen Polybutadiendispersion, wurde bei 70 °C in einen 1 Liter fassenden graduierten Standzylinder gefüllt. Über eine feinporige, am Boden des Standzylinders angeordnete Glasfritte wurde kontinuierlich Luft eingeblasen. Sobald das Schaumvolumen auf 500 ml angestiegen war, wurden 3 Tropfen der 2%igen wäßrigen Entschäumerdispersion aus einer Pipette auf die Schaumsäule aufgetropft. Die Zugabe wurde bei fortgesetzten Lufteinheiten nach 2 bzw. 3 Minuten wiederholt. Die Ergebnisse der im 30-Sekunden-Abstand durchgeführten Schaumbestimmungen sind in Tabelle 1 zusammengestellt. Z (Abkürzung für Zugabe) in Verbindung mit + bedeutet Zugabe von jeweils 3 Tropfen Entschäumerdispersion.

V. Vergleichsversuche

Als Vergleichssubstanzen dienten die folgenden bekannten Emulgatoren
V1 Cocosalkohol + 5 EO
V2 Cocosalkohol + 3 EO
V3 Nonylphenol + 6,5 EO
V4 Ölsäure + 8 EO
V5 Kaliumoleat

Mischungen aus 9 Teilen Blockpolymerem gemäß Beispiel 1a und 1 Teil Emulgator waren bei V1 leicht getrübt, in allen übrigen Fällen stark getrübt und in wäßriger Verdünnung (2 Gew.-%) nicht lagerbeständig. Wie aus Tabelle 1 ersichtlich, ist ihre Entschäumerwirkung unzureichend bzw. führt zu Störungen infolge Koagulationsbildung (Index K) bzw. verstärkter Schaumbildung. Die Versuche V2 und V5 wurden daher nach 1 Minute, die übrigen nach 2 Minuten abgebrochen.

| | | | | Schaumvolumen in ml | | | | | | |
|---|---|---|---|---|---|---|---|---|---|---|
| Beispiel | Start | z | 0,5 Min. | 1 Min. | z | 1,5 Min. | 2 Min. | z | 2,5 Min. | 3 Min. |
| 1 + 2a | 500 | + | 180 | 190 | + | 190 | 190 | + | 130 | 190 |
| 1 + 2b | 500 | + | 220 | 240 | + | 190 | 210 | + | 200 | 180 |
| 1 + 2c | 500 | + | 180 | 200 | + | 190 | 190 | + | 190 | 180 |
| V1 | 500 | + | 225 | 225 | + | 225 | 300 | | | |
| V2 | 500 | + | 175 | (K) | | | | | | |
| V3 | 500 | + | 290 | 350 | + | 300 | 420 | | | |
| V4 | 500 | + | 300 | 400 | + | 225 | 350 | | | |
| V5 | 500 | + | 500 | 500 | | | | | | |

Vergleichbare Ergebnisse werden gefunden, wenn anstelle des Blockpolymeren gemäß Beispiel 1 solche Blockpolymeren verwendet werden, in denen der Glycerinrest R durch einen Trimethylolpropanrest bzw. einen Trimethylolethanrest ersetzt ist und die folgende Formel aufweist

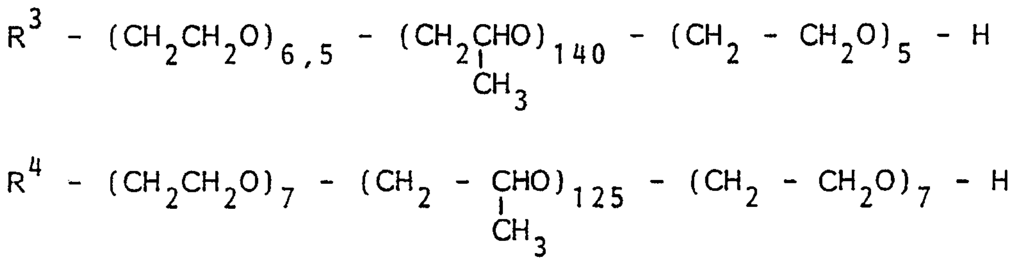

$R^3$ = Trimethylolpropan-Rest
$R^4$ = Trimethylolethan-Rest

**Patentansprüche**

1. Als Entschäumer verwendbares Gemisch, bestehend aus einem Blockpolymeren der Formel (I)

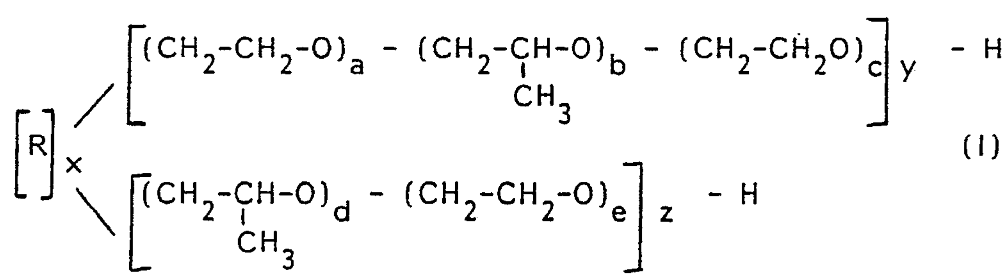

(I)

in der R für einen Glycerinrest, Trimethylolethanrest, Trimethylolpropanrest oder einen Polyglycerinrest mit dem Polymerisationsgrad x = 2 bis 6 steht und die Indices y = (x - z + 2), z = 0 bis 4, a = 1 bis 15, b = 20 bis 100, c = 1 bis 15, d = 20 bis 150 und e = 1 bis 15 bedeuten mit der Maßgabe, daß die Summen (a + c + e) = 3 bis 20, (b + d) = 40 bis 200 und (c + e) = 1 bis 15 bedeuten und y mindestens den Wert 1 besitzt sowie einem Emulgator der Formel (II)

$R^1 - O - (CH_2CH_2\text{-}O)_n - R^2$  (II)

in der $R^1$ für einen geradkettigen oder verzweigten Alkyl-oder Alkenylrest mit 8 bis 20 C-Atomen oder einen alkylaromatischen Rest mit 12 bis 20 C-Atomen, $R^2$ für einen Alkylrest mit 3 bis 8 C-Atomen und n für eine Zahl von 4 bis 30 steht.

2. Gemisch nach Anspruch 1, worin R für einen Glycerinrest und x für 1 steht.

3. Gemisch nach Anspruch 2, dadurch gekennzeichnet, daß in der Formel (II) $R^1$ für einen geradkettigen Alkylrest oder Alkenylrest mit 12 bis 18 C-Atomen, $R^2$ für einen Alkylrest mit 4 bis 6 C-Atomen und n für eine Zahl von 6 bis 20 steht.

4. Gemisch nach den Ansprüchen 1 bis 3, dadurch gekennzeichnet, daß es aus 99 bis 70 Gew.-%, vorzugsweise 96 bis 80 Gew.-% des Blockpolymeren und zu 1 bis 30 Gew.-%, vorzugsweise 4 bis 20 Gew.-% des Emulgators der Formel (II) besteht.

5. Verwendung eines Gemisches gemäß Ansprüche 1 bis 4 in Form einer wäßrigen Dispersion als Entschäumer.

**Claims**

1. A foam inhibitor mixture consisting of a block polymer corresponding to the following formula

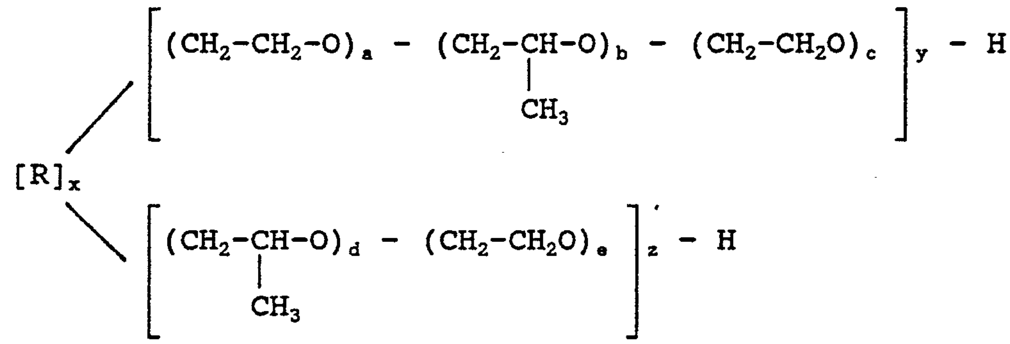

(I)

in which R represents a glycerol residue, trimethylol ethane residue, trimethylol propane residue or a polyglycerol residue having a degree of polymerization x of from 2 to 6 and the indices y = (x - z + 2), z = 0 to 4, a = 1 to 15, b = 20 to 100, c = 1 to 15, d = 20 to 150 and e = 1 to 15, with the proviso that the sums (a + c + e) = 3 to 20, (b + d) = 40 to 200 and (c + e) = 1 to 15 and y has a value of at least 1,
and of an emulsifier corresponding to the following formula

$R^1 - O - (CH_2CH_2\text{-}O)_n - R^2$ (II)

in which $R^1$ is a linear or branched $C_{8\text{-}20}$ alkyl or alkenyl radical or a $C_{12\text{-}20}$ aromatic alkyl radical, $R^2$ is a $C_{3\text{-}8}$ alkyl radical and n is a number of from 4 to 30.

2. A mixture as claimed in claim 1, in which R represents a glycerol residue and x = 1.

3. A mixture as claimed in claim 2, characterized in that, in formula (II), $R^1$ represents a straight-chain alkyl radical or alkenyl radical containing from 12 to 18 C atoms, $R^2$ represents an alkyl radical containing from 4 to 6 C atoms and n is a number of from 6 to 20.

4. A mixture as claimed in claims 1 to 3, characterized in that it consists of from 99 to 70% by weight and preferably of from 96 to 80% by weight of the block polymer and of from 1 to 30% by weight and preferably of from 4 to 20% by weight of the emulsifier corresponding to formula (II).

5. The use of the mixture claimed in claims 1 to 4 in the form of an aqueous dispersion as a foam inhibitor.

## Revendications

1. Mélange utilisable comme anti-mousse consistant en un polymère-bloc de formule (I)

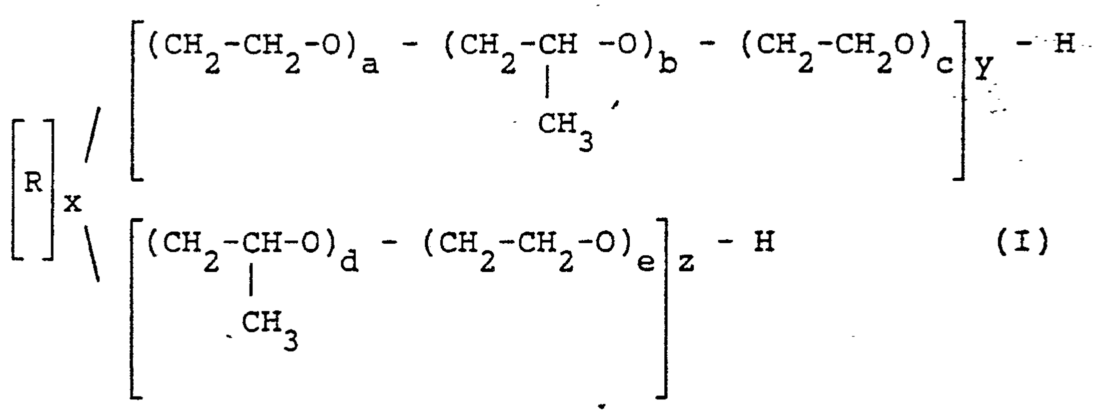

(I)

dans laquelle R représente un reste glycérol, un reste triméthyloléthane, un reste triméthylolpropane, ou un reste polyglycérol, avec un degré de polymérisation x = 2 à 6, et les indices signifient Y = (x - z + 2), z = 0 à 4, a = 1 à 15, b = 20 à 100, c = 1 à 15, d = 20 à 150 et e = 1 à 15, avec la restriction que la somme (a + c + e) = 3 à 20, la somme (b + d) = 40 à 200 et la somme (c + e) = 1 à 15 et y possède au moins la valeur 1, ainsi qu'en un agent émulsionnant de formule (II)

$R^1 - O - (CH_2CH_2\text{-}O)_n - R^2$ (II)

dans laquelle $R^1$ représente un reste alcoyle ou alcényle linéaire ou ramifié ayant de 8 à 20 atomes de Carbone ou un reste alcoyle aromatique ayant de 12 à 20 atomes de Carbone, $R^2$ représente un reste alcoyle ayant de 3 à 8 atomes de Carbone et n représente un nombre de 4 à 30.

**2.** Mélange selon la revendication 1 dans lequel R représente un reste glycérol et x représente 1.

**3.** Mélange selon la revendication 2, caractérisé en ce que dans la formule (II), $R^1$ représente un reste alcoyle à chaîne linéaire ou un reste alcényle ayant de 12 à 18 atomes de Carbone, $R^2$ représente un reste alcoyle ayant de 4 à 6 atomes du Carbone et n représente un nombre de 6 à 20.

**4.** Mélange selon les revendications 1 à 3, caractérisé en ce qu'il consiste en 99 à 70 % en poids - de préférence de 96 à 80 % en poids - du polymère-bloc et jusqu'à 1 à 30 % en poids - de préférence de 4 à 20 % en poids d'émulsionnant de formule (II).

**5.** Utilisation d'un mélange selon les revendications 1 à 4 sous forme d'une dispersion aqueuse, en tant qu'agent anti-mousse.